# EUROPÄISCHE PATENTSCHRIFT

(11) **EP 0 990 931 B1**
(45) Veröffentlichungstag und Bekanntmachung des Hinweises auf die Patenterteilung: **14.06.2006**
(21) Anmeldenummer: 99118932.5
(22) Anmeldetag: 25.09.1999
(51) Int. Cl.: G02B 6/42

(54) **Anordnung zum Ein- und Auskoppeln von Licht in Wellenleiter und Methode zu deren Herstellung**
Device for coupling light into and out of waveguides and method of its production
Dispositif de couplage et découplage de lumière dans des guides d'onde et procédé de son fabrication

(30) Priorität: 01.10.1998 DE 19845227
(43) Veröffentlichungstag der Anmeldung: 05.04.2000
(73) Patentinhaber: DaimlerChrysler AG, 70567 Stuttgart (DE)
(72) Erfinder: Moisel, Jörg, Dr., 89073 Ulm (DE)

(56) Entgegenhaltungen:
- EP-A- 0 463 457
- WO-A-96/07117
- WO-A-98/35253
- WO-A-99/50700
- US-A- 5 345 524
- US-A- 5 748 827
- LASER FOCUS WORLD, BUYERS GUIDE, Bd. 32, Nr. 13, 15. Dezember 1996 (1996-12-15), Seite 682 XP002195019
- PATENT ABSTRACTS OF JAPAN vol. 010, no. 327 (P-513), 7. November 1986 (1986-11-07) & JP 61 133911 A (NIPPON TELEGR & TELEPH CORP), 21. Juni 1986 (1986-06-21)
- LINDEN VAN DER J E ET AL: "MICROMACHINED PHOTODIODE SUBMOUNT WITH INTEGRATED MIRROR FOR EFFICIENT OUT-OF-PLANE COUPLING TO PLANAR POLYMERIC WAVEGUIDE CIRCUITS" JAPANESE JOURNAL OF APPLIED PHYSICS, PUBLICATION OFFICE JAPANESE JOURNAL OF APPLIED PHYSICS. TOKYO, JP, Bd. 37, Nr. 6B, Juni 1998 (1998-06), Seiten 3730-3735, XP000860818 ISSN: 0021-4922

## Beschreibung

In der optischen Verbindungstechnik, der optischen Nachrichtentechnik und in optischen Systemen ist es erforderlich, einzelne Bauelemente gegeneinander zu justieren und dabei auch die thermische Ausdehnung von Materialien unterschiedlicher Wärmeausdehnung zu berücksichtigen. Eine Möglichkeit, eine präzise Justage durchzuführen ist in Fachkreisen mit dem Begriff "kinematic mount" verbunden.

Aus dem US-Patent US 5,345,524 ist eine Anordnung zum Ein- oder Auskoppeln von Licht in oder aus Wellenleitern bekannt. Diese besteht aus einem auf einer Grundplatte aufgebrachten Separaten Spiegelträger mit Spiegelfläche, mindestens einem auf der Grundplatte angeordneten länglich ausgedehnten Wellenleiter sowie einer Haltevorrichtung zur Aufnahme von optoelektronischen Bauelementen. Diese setzen optisch übertragene Informationen in elektrische zu übertragende Informationen oder umgekehrt um.

Aus der Schrift US 5,748,827 ist eine derartige Anordnung mit zweistufiger Justage bekannt, mit der die Lage mehrerer optischer Bauteile zueinander über eine erste Grobjustage und eine anschließende Feinjustage festgelegt wird. Dabei werden 6 Freiheitsgrade -3 der Translation und 3 der Rotation- erfaßt. Damit die zur Justage vorgesehenen Marken ineinandergreifen, ist bei der Grobjustage beim Zusammenfügen der einzelnen Komponenten eine Positioniergenauigkeit im sub-Millimeterbereich in allen Richtungen erforderlich. Erst mit der Vorrichtung zur Feinjustage wird dann eine Positioniergenauigkeit von einigen Mikrometern erzielt.

Aus der Schrift US 4,268,123 ist eine weitere Anordnung zur Justage beschrieben, mit der optische Komponenten mit geringen Verspannungen gehaltert werden können. Durch ein Ineinandergreifen ringförmiger Elemente soll die Spannungsübertragung vom Gehäuse auf die optischen Bauteile vermieden werden.

Diese vergleichsweise aufwendigen Techniken sind erforderlich, da alle notwendigen Justagemarken auf einem Träger aufgebracht sind, und die anderen Komponenten mit großer Genauigkeit an die dafür vorgesehene Stelle positioniert oder über mehrstufige Verfahren grob- und feinjustiert werden müssen.

Der Erfindung liegt die Aufgabe zugrunde, eine Anordnung anzugeben, mit der eine einfache Justage mit hoher Genauigkeit optischer Komponenten zueinander durchgeführt werden kann.

Die Erfindung wird in Bezug auf die Anordnung durch die Merkmale des Patentanspruchs 1 wiedergegeben. Die weiteren Ansprüche enthalten vorteilhafte Aus- und Weiterbildungen der Erfindung. Ein erfindungsgemäßes Verfuhren ist Gegenstand des Anspruchs 6.

Die Erfindung beinhaltet eine Anordnung zum Ein- oder Auskoppeln von Licht in oder aus Wellenleitern. Die Anordnung besteht aus einem auf einer Grundplatte aufgebrachten Spiegelträger mit Spiegelfläche, mindestens einem Wellenleiter sowie einer Haltevorrichtung zur Aufnahme optischer oder optoelektronischer Bauelemente. Der Spiegelträger und die Haltevorrichtung weisen Justagemarken auf, die so ineinandergreifen, daß eine Justage zunächst in einer zur Längserstreckung des Wellenleiters parallelen Richtung (x-Richtung) erfolgt. Die Haltevorrichtung und die Grundplatte besitzt weitere Justagemarken, über die, unabhängig von der zuvor festgelegten x-Richtung, eine Justage in einer zur Längserstreckung des Wellenleiters senkrechten Richtung (y-Richtung) gewährleistet ist.

Dabei sind optische oder optoelektronische Bauelemente bevorzugt in die Haltevorrichtung in eine Aufnahmeöffnung eingepaßt. Als optische oder optoelektronische Bauelemente werden Linsen, Leucht- oder Laserdioden, Photodioden, Glasfaserstecker verwendet.
Für die Grundplatte, wie auch für alle anderen Teile, können unterschiedliche Materialien Verwendung finden, die bevorzugt aus Halbleitermaterial oder keramischem Material oder aus Kunststoffen für Leiterplatten bestehen.

Die ersten Justagemarken sind im Spiegelträger als keilförmige Einsenkung oder als Nut und die zweiten Justagemarken sind in der Haltevorrichtung als aus der Unterseite der Haltevorrichtung herausragende und gegebenenfalls langgestreckte Keile oder Zapfen ausgebildet.
Die vierten Justagemarken ragen aus der Unterseite der Haltevorrichtung als Halbkugeln, Keile oder konische Zapfen heraus.

Ein besonderer Vorteil der Erfindung besteht darin, daß die erforderliche Positioniergenauigkeit über mehrere Prozeßschritte hinweg gewährleistet ist. Da die notwendigen Justagemarken für die jeweilige Justage in x- oder y-Richtung sich auf unterschiedlichen Trägern befinden, wird lediglich durch ein Einrasten zweier zusammengehöriger Justagemarken die jeweilige Position in einer Richtung festgelegt. Beispielsweise erfolgt die Justage in x-Richtung durch eine Kerbe auf dem Spiegelträger, wobei die zunächst nicht definierte y-Richtung infolge der lateralen Ausdehnung des Spiegels keine Anforderungen an die Justiergenauigkeit stellt. Die Justage in y-Richtung erfolgt davon unabhängig, indem beispielsweise ein Wellenleiter zwar zum optischen Bauteil in der Haltevorrichtung präzise angeordnet wird, dieser jedoch ohne Qualitätseinbuße entlang der Spiegelfläche versetzt werden kann.
Insgesamt reicht für die Justage eine Genauigkeit von wenigen mm in beiden Justageschritten aus, um die Haltevorrichtung für die optischen Bauteile dennoch auf wenige Mikrometer genau über dem Wellenleiter zu positionieren.
Ein weiterer Vorteil der Anordnung ist darin zu sehen, daß die Justage in x- und y-Richtung passiv, durch Einrasten bewerkstelligt wird und nicht unter einem Mikroskop an die richtige Stelle gebracht werden muß.

Im folgenden wird die Erfindung anhand von vorteilhaften Ausführungsbeispielen unter Bezugnahme auf schematische Zeichnungen in den Figuren näher erläutert. Es zeigen:
- Fig. 1: Spiegelträger mit erster Justagemarke,
- Fig. 2: Schnitt der Anordnung parallel zur Wellenleiterlängsachse (Seitenansicht),
- Fig. 3: Schnitt der Anordnung senkrecht zur Wellenleiterlängsachse (entlang der in Fig.2 dargestellten Linie A; Vorderansicht).

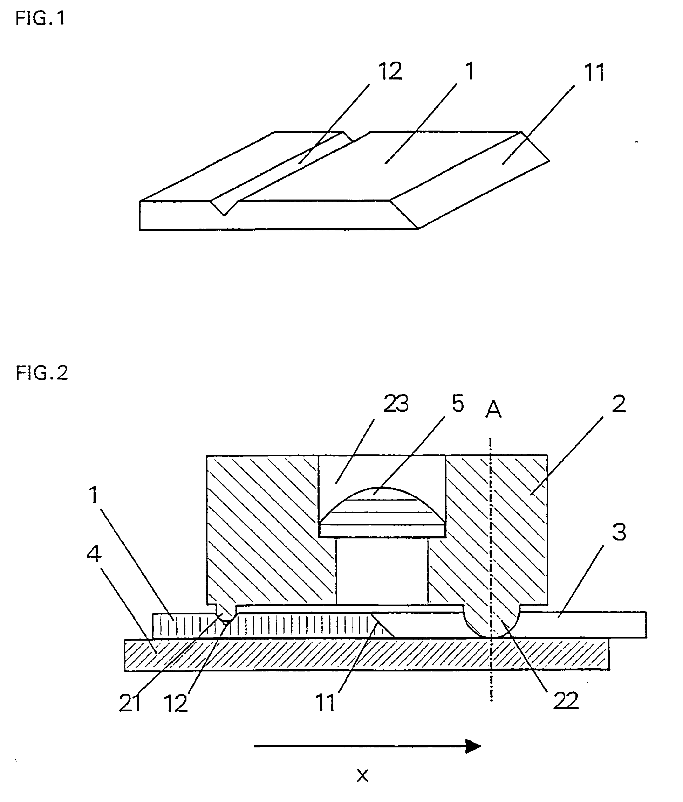

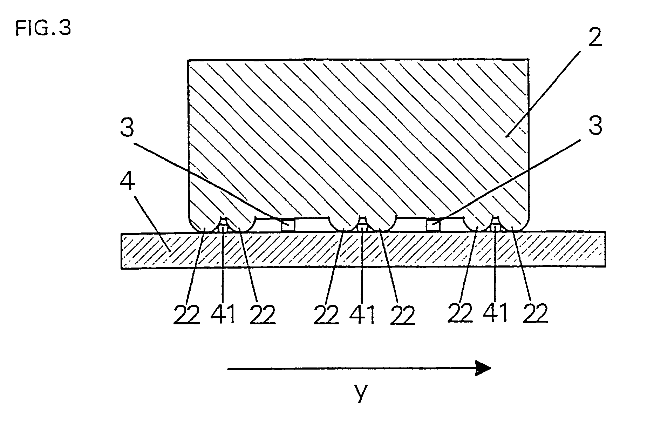

In einem ersten Ausführungsbeispiel gemäß Fig. 1 wird ein Spiegelträger 1 mit einer an der Seitenwand abgeschrägten Spiegelfläche 11 dargestellt. Als erste Justagemarke 12 ist für eine Justage in x-Richtung eine keilförmige Nut in die Oberfläche eingebracht. Der Spiegelträger 1 ist gemäß Fig. 2 auf einer Grundplatte 4 positioniert. Die zweite Justagemarke 21 auf der Unterseite der Haltevorrichtung 2 greift in die Nut der ersten Justagemarke 12 und justiert damit die Spiegelfläche 11 bezüglich des in der Haltevorrichtung 2 eingebrachten optischen Bauelements 5. Eine laterale Verschiebung entlang der Nut bewirkt lediglich eine parallele Verschiebung entlang der ausgedehnten Spiegelfläche 11, die für eine Justage in x-Richtung unmaßgeblich ist. Als optisches Bauelement 5 wurde in diesem Fall eine Linse gewählt, die in einer Aufnahmeöffnung 23 präzise gehaltert wird. Der Wellenleiter 3 ist bis zur Spiegelfläche 11 herangeführt und kann gegebenenfalls an der Berührungsfläche mittels eines im Brechungsindex an den Wellenleiter angepaßten Mediums verbunden sein. Die Justage erfolgt mit den in Fig.3 dargestellten Marken 22 und 41. Die Figur zeigt einen Schnitt entlang der Linie A der Fig. 2, der senkrecht zur Zeichenebene verläuft. Zur Justage in y-Richtung greifen die dritten Justagemarken 22 und die vierten Justagemarken 41 so ineinander, daß der Wellenleiter 3 präzise positioniert wird. Der Wellenleiter 3 wird üblicherweise mit den vierten Justagemarken 41 in einem Prozeßschritt hergestellt, wodurch beide einen genau definierten Abstand zueinander besitzen. Demnach sind die einzelnen Bauteile sowohl die x-Richtung wie auch die y-Richtung in ihrer Position zueinander genau festgelegt. Als Justagemarken werden keilförmige Einsenkungen oder Nuten in Verbindung mit Keilen oder Zapfen bevorzugt als Geometrien gewählt, um einen Einrastvorgang der Bauteile beim Zusammenfügen zu bewirken.

## Patentansprüche

1. Anordnung zum Ein- oder Auskoppeln von Licht in Wellenleiter oder aus Wellenleitern, bestehend aus einem auf einer Grundplatte (4) aufgebrachten Spiegelträger (1) mit Spiegelfläche (11), mindestens einem auf der Grundplatte angeordneten, länglich ausgedehnten Wellenleiter (3) mit optischer Achse sowie einer über der Spiegelfläche angeordneten Haltevorrichtung (2) zur Aufnahme optischer oder optoelektronischer Bauelemente (5), in die oder aus denen Licht über die Spiegelfläche in den oder aus dem Wellenleiter ein bzw. ausgekoppelt wird,
wobei
der Spiegelträger (1) separat zur Grundplatte ausgebildet ist,
**dadurch gekennzeichnet**
- **dass** der Spiegelträger (1) eine erste Justagemarke (12) und die Haltevorrichtung (2) wenigstens eine zweite Justagemarke (21) aufweist, die so ineinander greifen, daß eine Justage der Haltevorrichtung (2) gegenüber der grundplatte (4) in einer zu der Längsausdehnung und damit zur optischen Achse des Wellenleiters (3) parallelen Richtung erfolgt, wobei bei ineinander greifenden ersten und zweiten Justagemarken eine Verschiebung der Haltevorrichtung (2) gegenüber der Grundplatte (4) in zur parallelen Richtung senkrechten Richtung ermöglicht ist,
wobei die eine erste Justagemarke (12) im Spiegelträger (1) als keilförmige Einsenkung oder als Nut und die eine zweite Justagemarke oder mehreren zweiten Justagemarken (21) als aus der Unterseite der Haltevorrichtung (2) herausragende und gegebenenfalls lang gestreckte Keile oder Zapfen ausgebildet ist bzw. sind,
und
- **dass** die Haltevorrichtung (2) dritte Justagemarken (22) und die Grundplatte (4) vierte Justagemarken (41) aufweist, über die eine Justage in einer zu der Längsausdehnung und damit zur optischen Achse des Wellenleiters (3) senkrechten Richtung erfolgt.

2. Anordnung nach Anspruch 1, **dadurch gekennzeichnet, dass** die Haltevorrichtung (2) eine Aufnahmeöffnung (23) besitzt, in die optische oder optoelektronische Bauelemente (5) eingepasst sind.

3. Anordnung nach Anspruch 1 oder 2, **dadurch gekennzeichnet, dass** die optischen oder optoelektronischen Bauelemente (5) aus Linsen, Leucht- oder Laserdioden, Photodioden oder Glasfasersteckern bestehen.

4. Anordnung nach Anspruch 1, **dadurch gekennzeichnet, dass** die Grundplatte (4) aus Halbleitermaterial oder keramischem Material oder aus einer Leiterplatte besteht.

5. Anordnung nach Anspruch 1, **dadurch gekennzeichnet, dass** die dritten und vierten Justagemarken (22, 41) als aus der Unterseite der Haltevorrichtung (2) und der Oberseite der Grundplatte (4) herausragende halbkugeförmige oder konische Zapfen ausgebildet sind.

6. Verfahren zur Herstellung einer Anordnung wie definiert in einem der Ansprüche 1 bis 5, **dadurch gekennzeichnet, dass** die ersten, zweiten und dritten Justagemarken gemäß einem der Ansprüche 1 bis 5 hergestellt werden und in einem Prozessschritt mit dem Wellenleiter (3) die vierten Justagemarken hergestellt werden.

## Claims

1. Arrangement for coupling light into or from waveguides, comprising a mirror support (1) mounted on a baseplate (4) and having a reflecting surface (11), at least one elongated waveguide (3) which is arranged on the baseplate and has an optical axis, as well as a holding device (2), arranged above the reflecting surface, for accommodating optical or optoelectronic components (5) into or from which light is respectively coupled via the reflecting surface from or into the waveguide, the mirror support (1) being designed separately from the base plate, **characterized**
- **in that** the mirror support (1) has a first adjustment mark (12), and the holding device (2) has at least one second adjustment mark (21) which interlock in such a way that the holding device (2) is adjusted with reference to the baseplate (4) in a direction parallel to the longitudinal extent and thus to the optical axis of the waveguide (3), an adjustment of the holding device (2) with reference to the baseplate (4) in the direction perpendicular to the parallel direction being enabled upon interlocking of the first and second adjustment marks, the one first adjustment mark (12) in the mirror support (1) being designed as a wedge-shaped depression or as a groove, and the one second adjustment mark or several second adjustment marks (21) being designed as wedges or pins which project from the underside of the holding device (2) and are elongated if appropriate, and
- **in that** the holding device (2) has third adjustment marks (22), and the baseplate (4) has fourth adjustment marks (41) via which an adjustment is performed in a direction perpendicular to the longitudinal extent and thus to the optical axis of the waveguide (3).

2. Arrangement according to Claim 1, **characterized in that** the holding device (2) has an accommodating opening (23) into which optical or optoelectronic components (5) are fitted.

3. Arrangement according to Claim 1 or 2, **characterized in that** the optical or optoelectronic components (5) comprise lenses, light-emitting or laser diodes, photodiodes or optical fibre connectors.

4. Arrangement according to Claim 1, **characterized in that** the baseplate (4) consists of semiconductor material or ceramic material or of a printed circuit board.

5. Arrangement according to Claim 1, **characterized in that** the third and fourth adjustment marks (22, 41) are designed as hemispherical or conical pins projecting from the under side of the holding device (2) and the top side of the baseplate(4).

6. Method for producing an arrangement as defined in one of Claims 1 to 5, **characterized in that** the first, second and third adjustment marks are produced in accordance with one of Claims 1 to 5, and the fourth adjustment marks are produced in a process step with the waveguide (3).

## Revendications

1. Ensemble de couplage de lumière dans des guides d'ondes ou de découplage de lumière à partir de guides d'ondes, composé d'un support de miroir (1), monté sur une plaque de base (4), avec une surface spéculaire (11), au moins un guide d'ondes (3) disposé sur la plaque de base, s'étendant de façon longitudinale et ayant un axe optique, ainsi qu'un dispositif de retenue (2) disposé sur la surface spéculaire pour recevoir des composants optiques ou optoélectroniques (5) dans lesquels la lumière est couplée dans le guide d'ondes ou à partir desquels la lumière est découplée du guide d'ondes par l'intermédiaire de la surface spéculaire, dans lequel le support de miroir (1) est réalisé séparément de la plaque de base, **caractérisé en ce que**
- le support de miroir (1) présente un premier repère d'alignement (12) et le dispositif de retenue (2) présente au moins un deuxième repère d'alignement (21) qui s'enclenchent l'un dans l'autre de telle sorte qu'un alignement du dispositif de retenue (2) par rapport à la plaque de base (4) s'effectue dans une direction parallèle à l'extension longitudinale et donc à l'axe optique du guide d'ondes (3), dans lequel, lorsque les premier et deuxième repères d'alignement s'enclenchent l'un dans l'autre, un décalage du dispositif de retenue (2) par rapport à la plaque de base (4) est rendu possible dans une direction perpendiculaire à la direction parallèle, dans lequel ledit premier repère d'alignement (12) dans le support de miroir (1) est réalisé comme un enfoncement cunéiforme ou comme une rainure, et ledit deuxième repère d'alignement ou plusieurs deuxièmes repères d'alignement (21) sont réalisés comme des coins ou tenons qui font saillie à partir de la face inférieure du dispositif de retenue (2) et qui sont éventuellement allongés ; et **en ce que**
- le dispositif de retenue (2) présente des troisièmes repères d'alignement (22) et la plaque de base (4) présente des quatrièmes repères d'alignement (41) par l'intermédiaire desquels un alignement a lieu dans une direction perpendiculaire à l'extension longitudinale et donc à l'axe optique du guide d'ondes (3).

2. Ensemble selon la revendication 1, **caractérisé en ce que** le dispositif de retenue (2) possède une ouverture de réception (23) dans laquelle les composants optiques ou optoélectroniques (5) sont adaptés.

3. Ensemble selon la revendication 1 ou 2, **caractérisé en ce que** les composants optiques ou optoélectroniques (5) se composent de lentilles, de diodes électroluminescentes ou de diodes laser, de photodiodes ou de connecteurs de fibre optique.

4. Ensemble selon la revendication 1, **caractérisé en ce que** la plaque de base (4) se compose d'un matériau semi-conducteur ou d'un matériau céramique ou d'une carte à circuits imprimés.

5. Ensemble selon la revendication 1, **caractérisé en ce que** les troisièmes et quatrièmes repères d'alignement (22, 41) sont réalisés comme des tenons hémisphériques ou coniques, faisant saillie à partir de la face inférieure du dispositif de retenue (2) et de la face supérieure de la plaque de base (4).

6. Procédé de fabrication d'un ensemble selon l'une quelconque des revendications 1 à 5, **caractérisé en ce que** les premiers, deuxièmes et troisièmes repères d'alignement sont fabriqués selon l'une quelconque des revendications 1 à 5, et les quatrièmes repères d'alignement sont fabriqués dans une étape de procédé avec le guide d'ondes (3).
